# FASCICULE DE BREVET EUROPEEN

(11) **EP 0 499 511 B1**
(45) Date de publication et mention de la délivrance du brevet: **03.05.1995**
(21) Numéro de dépôt: 92400303.1
(22) Date de dépôt: 06.02.1992
(51) Int. Cl.: G11B 17/26

(54) **Dispositif de stockage et de lecture de supports d'informations plats**
Vorrichtung zur Lagerung und Wiedergabe von flachen Informationsträgern
Device for storing and reproducing of flat information carriers

(30) Priorité: 12.02.1991 FR 9101599
(43) Date de publication de la demande: 19.08.1992
(73) Titulaire: Amar, Roger, F-78350 Jouy-en-Josas (FR)
(72) Inventeur: Amar, Roger, F-78350 Jouy-en-Josas (FR)
(74) Mandataire: Foldès, Georges

(56) Documents cités:
- EP-A- 0 173 136
- US-A- 2 463 050
- US-A- 2 719 720
- US-A- 2 725 235
- PATENT ABSTRACTS OF JAPAN vol. 14, no. 358 (P-1087)(4301) 2 Août 1990 & JP-A-2 130 751 (FUJITSU LTD.) 18 Mai 1990
- PATENT ABSTRACTS OF JAPAN vol. 10, no. 135 (P-457)(2192) 20 Mai 1986&JP-A-60 256 959 (PIONEER K.K.) 18 decembre 1985
- PATENT ABSTRACTS OF JAPAN vol. 14, no. 385 (P-1094)(4328) 20 Août 1990 & JP-A-2 143 942 (ALPINE ELECTRON INC.) 1 Juin 1990

## Description

L'invention se rapporte à un dispositif de stockage et de lecture de supports d'informations plats tels que par exemple des disques à lecture par faisceau laser; elle concerne plus particulièrement un tel dispositif permettant à la fois de stocker et de conserver dans les meilleures conditions un grand nombre de tels supports d'informations tout en permettant l'accès rapide à n'importe lequel d'entr'eux.

En peu d'années, les disques audiofréquence à lecture par faisceau laser ont largement supplanté les disques en vinyle. Chez les amateurs aussi bien que dans les studios de radio et télévision, des discothèques entières se sont rapidement reconstituées, tant sont nombreux les avantages de ce support d'informations. On s'aperçoit cependant que la gestion d'un grand nombre de tels disques n'est pas si aisée en raison même de leur dimension réduite. En effet, les inscriptions figurant sur le boîtier d'un tel disque sont nécessairement écrites en très petits caractères et, à moins d'un classement alphabétique rigoureux, il n'est pas rare de devoir rechercher assez longtemps un titre particulier parmi tous les disques disposés côte à côte sur une étagère. Une erreur de classement demande une recherche longue et fastidieuse.

Pour programmer une durée de reproduction assez longue, par exemple pour écouter une oeuvre enregistrée sur plusieurs disques, certains constructeurs de lecteurs proposent des systèmes de changement automatique d'un nombre limité de disques. Un chargeur capable de recevoir quelques disques, peut être rempli par l'utilisateur qui dispose de moyens de programmation adaptés pour pouvoir lire les disques dans un ordre donné. Cependant, pour être mis en oeuvre, ce système nécessite de manipuler les disques. Il faut les sortir de leurs coffrets, les placer dans le chargeur puis, après la reproduction, il faut extraire manuellement les disques du chargeur, les ranger un à un dans leurs coffrets et reclasser ces derniers. Toutes ces opérations sont longues, fastidieuses et sources d'erreurs.

Le document EP-A-0 173 136 décrit un lecteur de disques à changeur incorporé selon le préambule de la revendication 1 ; ce lecteur permet de stocker quelques disques pour pouvoir les lire les uns à la suite des autres au moyen d'un équipage de transfert avec lecteur incorporé.

L'invention propose un autre concept permettant de stocker tous les supports d'informations (typiquement les disques) à la disposition de l'utilisateur, dans une même petite armoire où ceux-ci se trouvent définitivement placés dans des conditions de stockage optimales et à l'abri des fausses manoeuvres, et d'intégrer à ce système de stockage, des moyens de manipulation automatique des supports d'informations pour les déplacer entre leurs emplacements de stockage respectifs et un ou plusieurs lecteurs de ces supports d'informations.

L'invention concerne un dispositif de stockage et de lecture de supports d'informations plats, tels que par exemple des disques à lecture par faisceau laser, comprenant au moins une colonne de plateaux de stockage de tels supports d'informations, empilés les uns sur les autres et montés mobiles indépendamment dans leurs propres plans respectifs, de façon qu'un plateau sélectionné puisse s'extraire latéralement de ladite colonne, un équipage de transfert monté mobile parallèlement à ladite colonne et comportant des moyens de préhension d'un tel support d'informations, des moyens de sélection d'un support d'informations, adaptés à déplacer dans son propre plan le plateau de stockage correspondant pour l'amener en regard des moyens de préhension et au moins un lecteur, caractérisé en ce que ledit lecteur comporte une partie de chargement, par exemple un tiroir, agencée pour pouvoir se placer en regard d'une position prédéterminée dudit équipage de transfert, pour recevoir un tel support d'informations et en ce que ledit équipage de transfert et ledit lecteur sont des sous-ensembles indépendants et autonomes.

La ou chaque colonne de plateaux est associée à une colonne-support de ces plateaux de stockage formant moyens d'entretoisement. Chaque plateau de stockage est muni d'un bras plat venant s'articuler à ladite colonne-support. Selon un mode de réalisation particulièrement avantageux, la colonne-support est formée par un empilage rigide d'éléments formant entretoises, identiques, comportant chacun un tronçon d'arbre de pivotement, cylindrique. Chaque bras plat d'un plateau est quant à lui muni d'un trou correspondant par lequel il est monté tournant autour dudit tronçon d'arbre.

L'invention couvre tout dispositif défini ci-dessus comportant au moins une colonne de plateaux de stockage. Cependant, selon un mode de réalisation avantageux, le dispositif est pourvu de plusieurs colonnes de plateaux de stockage agencées sur un ensemble tournant assujetti en rotation autour d'un arbre central parallèle auxdites colonnes. Des moyens d'entraînement commandés sont couplés audit ensemble tournant pour mettre l'une ou l'autre des colonnes en un emplacement prédéterminé lui permettant de coopérer avec l'équipage de transfert.

Comme on le verra plus loin, le système de stockage peut être optimisé au point d'être réalisé par des empilages de seulement deux sortes de pièces différentes en matière plastique moulée, respectivement les plateaux de stockage et les éléments constitutifs de la ou chaque colonne-support.

Bien que le mode de réalisation particulièrement envisagé aujourd'hui et qui sera décrit en détail ci-dessous soit conçu pour les disques à lecture par faisceau laser, le même principe peut être appliqué au stockage à accès rapide de tout autre type de support d'informations plat. A titre d'exemple, on envisage dans peu de temps des mémoires de masse, statiques, entièrement à semi-conducteurs, se présentant sous forme de "galette" plate. Certains points de la surface d'un tel support d'informations comporteraient des contacts destinés à être raccordés à un connecteur de lecture adapté. Un système tel que défini ci-dessus peut donc parfaitement convenir pour le stockage et la manipulation automatique de tels supports d'informations. Il suffit de remplacer le lecteur de disques par un lecteur statique adapté à ce type de mémoire.

Si on veut éliminer les temps morts lors d'un changement de support d'informations, il suffit de prévoir deux lecteurs, par exemple disposés l'un en-dessous de l'autre de façon que le système de gestion programmé puisse charger l'un des lecteurs pendant que l'autre est en fonctionnement. Pour des applications telles que la diffusion de programmes vers un ensemble de cabines ou de casques d'écoute individuels (équipement d'un centre culturel ou de loisirs ou d'un magasin de vente de disques) il est possible de disposer un plus grand nombre de lecteurs encore, chaque lecteur étant relié à une cabine ou un casque d'écoute individuel.

L'invention sera mieux comprise et d'autres avantages de celle-ci apparaîtront plus clairement à la lumière de la description qui va suivre d'un mode de réalisation d'un dispositif de stockage et de lecture de disques conforme à son principe, donnée uniquement à titre d'exemple et faite en référence aux dessins annexés dans lesquels:
- la figure 1 est une vue schématique partielle en élévation du dispositif;

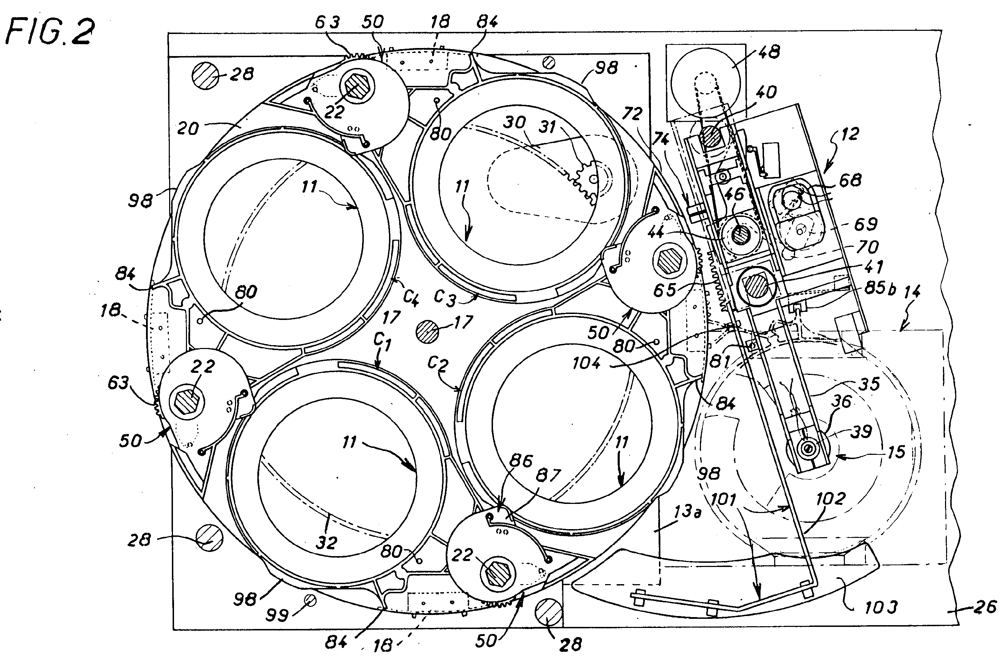

- la figure 2 est une vue de dessus du même dispositif;

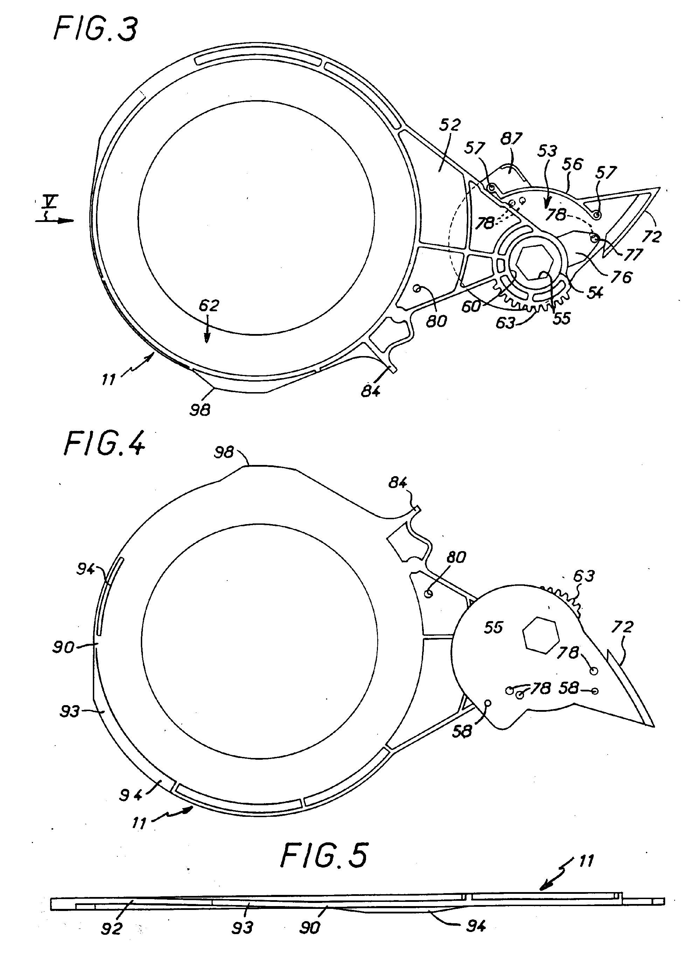

- la figure 3 est une vue de détails montrant la coopération entre un plateau de stockage et un élément formant entretoise d'une colonne-support;
- la figure 4 est une vue de dessous de la figure 3; et
- la figure 5 est une vue de profil à plus grande échelle, du plateau de stockage, vu selon la flèche V de la figure 3.

Le dispositif de stockage et de lecture de disques tel que représenté comprend principalement quatre colonnes verticales C1, C2, C3, C4 de plateaux de stockage 11, adaptés à recevoir de tels disques, un équipage de transfert 12 pour manipuler de tels disques, des moyens de sélection d'un disque choisi dont les éléments principaux seront décrits plus loin et au moins un lecteur 13 de disques, ici installé en-dessous des colonnes de plateaux de stockage. La partie de chargement d'un tel lecteur est constitué par un tiroir 14 classique et le lecteur est positionné de telle sorte que ledit tiroir puisse se placer momentanément en regard d'une position prédéterminée de l'équipage de transfert 12. Ce dernier comporte des moyens de préhension 15 d'un disque, commandés de sorte que ledit équipage de transfert puisse saisir un disque sur un plateau de stockage 11 sorti de sa colonne et venir le déposer, à une telle position prédéterminée, sur le plateau du lecteur 13. Si plusieurs lecteurs 13a, 13b sont prévus, comme représenté, ils sont placés les uns sous les autres de façon que les tiroirs viennent sélectivement se placer sous l'équipage de transfert pour pouvoir recevoir un disque. Un tiroir de chargement manuel non représenté est également prévu de façon à pouvoir venir, de la même façon, en regard du trajet de l'équipage de transfert. Il peut être agencé au voisinage des lecteurs ou, de préférence, au-dessus des colonnes C1-C4 de plateaux de stockage. Grâce à ce tiroir, on peut utiliser l'équipage de transfert pour introduire un nouveau disque dans le système de stockage et le placer sur un plateau de stockage ou au contraire pour en extraire un disque afin de l'éliminer de la collection. Tous les éléments décrits ci-dessus sont montés à l'intérieur d'un châssis 25 formé d'une plaque inférieure 26, constituant une sorte d'embase, d'une plaque supérieure 27 et de colonnes verticales 28 réunissant les deux plaques. Ce châssis est habillé d'un boîtier non représenté mettant les disques à l'abri de toute manipulation et les protégeant relativement bien de la poussière, des variations de température, d'humidité, etc...

Dans le mode de réalisation représenté, chaque colonne comporte cent plateaux de stockage. Le dispositif peut donc accueillir quatre cents disques, chacun accessible individuellement en un temps très faible, de l'ordre de quelques secondes. Bien entendu, rien n'interdit d'augmenter la hauteur de chaque colonne pour réaliser des variantes de plus grande capacité de stockage. Il suffit que la course de l'équipage de transfert 12 soit augmentée en conséquence. Pour de très grandes discothèques, rien n'empêche de coupler plusieurs dispositifs entr'eux et de les associer à un même système d'informatique de gestion et de commande.

L'invention couvre tout dispositif comportant au moins une telle colonne de plateaux de stockage. Dans ce cas, la colonne est fixe et agencée à côté du trajet vertical de l'équipage de transfert 12.

Dans l'exemple représenté où on compte quatre colonnes C1-C4, celles-ci sont agencées sur un ensemble tournant 16 assujetti en rotation autour d'un arbre central 17, vertical, c'est-à-dire parallèle aux colonnes C1-C4 elles-mêmes. L'ensemble tournant est adapté pour venir placer une colonne quelconque dans une position privilégiée lui permettant de coopérer avec l'équipage de transfert. La sélection d'une colonne se fait par l'intermédiaire d'une cellule opto-électrique ou analogue (non représenté) sensible à des réflecteurs 18 solidaires de l'ensemble tournant. Ce dernier comprend deux grands plateaux circulaires horizontaux 19, 20 réunis par quatre tiges métalliques 22 à section hexagonale régulièrement espacées circonférentiellement. Les moyens d'entraînement de cet ensemble tournant sont commandés. Ils comprennent un moteur électrique 30 dont l'arbre de sortie est couplé par un pignon 31 à une couronne dentée 32 fixée à la face inférieure du plateau 20. Pour un fonctionnement plus silencieux, on peut remplacer ce système par une transmission par courroie en prévoyant une gorge sur le bord du plateau 18 ou 19, recevant la courroie entraînée par le moteur. Le pilotage du moteur 30 qui conditionne la rotation des colonnes de plateaux est assuré par un ensemble de moyens de détection de position, notamment le capteur coopérant avec les réflecteurs 18 et d'autres qui seront décrits plus loin.

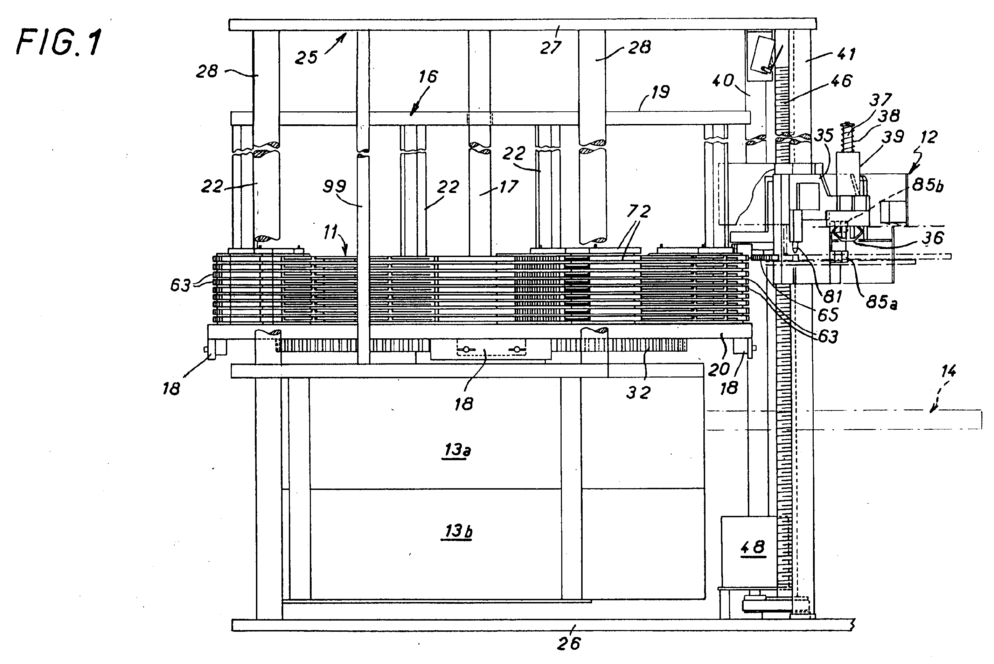

L'équipage de transfert 12 comporte un bras 35 à l'extrémité duquel se trouve un noyau déformable 36, ici en matériau élastomère. Ce noyau est solidaire d'une tige 37, sollicitée vers le haut par un ressort 38. Cette tige traverse une bobine électromagnétique 39. Lorsque la bobine n'est pas alimentée, le noyau 36 est déformé radialement comme représenté sur la figure 1, sous l'action du ressort. En revanche, lorsqu'elle est alimentée, la tige 37 est déplacée vers le bas, ce qui déforme le noyau pour lui donner une forme sensiblement cylindrique de diamètre tel qu'il puisse être engagé dans le trou central d'un disque. L'équipage de transfert 12 coulisse entre deux tiges verticales 40, 41 s'étendant entre les plaques 26 et 27 du châssis. Il comporte en outre une noix taraudée 44, immobilisée en rotation, en prise avec une tige filetée 46, verticale, entraînée en rotation par son extrémité inférieure au moyen d'un moteur électrique 48 commandé, via un système de transmission à courroie crantée. Cet agencement classique assure le déplacement vertical dudit équipage de transfert 12. Ledit équipage de transfert comporte divers autres équipements, notamment des capteurs opto-électriques à partir desquels sont élaborés tous les signaux de pilotage commandant les différents mouvements. Ces équipements seront décrits en détail plus loin.

On va maintenant décrire plus précisément la structure d'une colonne C1-C4 et des plateaux de stockage qui la compose. Comme mentionné précédemment, les plateaux 11 d'une même colonne sont empilés les uns sur les autres et montés mobiles dans leurs propres plans, de façon qu'un plateau quelconque puisse être sorti latéralement de sa propre colonne et placé dans une position permettant à l'équipage de transfert d'y prendre ou déposer un disque. Dans l'exemple, les plateaux sont montés pivotants horizontalement. Pour ce faire, une colonne-support 50 desdits plateaux de stockage est agencée parallèlement à chaque colonne C1-C4 c'est-à-dire vertialement, ici autour d'une tige à section hexagonale 22. Cette colonne-support, fixe sur l'ensemble tournant 16, est segmentée verticalement de façon à former des moyens d'entretoisement agencés pour maintenir un espace vertical faible constant entre les plateaux de stockage. Chaque plateau est pourvu d'un bras plat 52 venant s'articuler à la colonne-support 50 correspondante. Une telle colonne-support est ainsi formée par un empilage rigide, sur la tige 22 correspondante, d'éléments identiques formant des entretoises 53. Chacun de ces éléments 53 comporte un tronçon d'arbre de pivotement 54 dont le centre est percé d'un trou à section hexagonale 55 de dimension correspondant à celle de la tige 22. La distance d'entretoisement est donnée à la fois par la longueur axiale de ces tronçons 54 qui s'empilent les uns sur les autres et par des nervures 56 munies de pions 57 à leurs extrémités. Ces derniers viennent s'engager dans des trous 58 de la face inférieure de l'élément voisin. Par ailleurs, chaque bras 52 d'un plateau de stockage comporte un trou cylindrique 60 dont le diamètre correspond à celui du tronçon d'arbre 54. De ce fait, le bras 52 et par conséquent le plateau 11 se trouve monté tournant autour dudit tronçon d'arbre 54.

Chaque plateau de stockage 11 comporte par ailleurs une partie annulaire pourvue d'une empreinte creuse 62 sur sa face supérieure, adaptée à recevoir un disque. Un secteur denté 63 coaxial au trou 60 est défini à l'extrémité de chaque bras. Il fait partie des moyens de sélection précités car c'est l'engagement d'un tel secteur denté avec un autre moyen d'engrenage 65, rétractable, porté par l'équipage de transfert 12 qui permet de sélectionner le plateau de stockage 11 correspondant, de le faire pivoter jusqu'à l'amener en regard du bras 35 pour y prendre ou y placer un disque. Dans l'exemple, le moyen d'engrenage 65 a la forme d'une crémaillère. Elle est montée pivotante en direction de la colonne de plateaux de stockage la plus proche et est actionnée par un moteur électrique 68 fortement démultiplié, via une came 69 et un levier 70 lié à la crémaillère. Ce type de commande de la crémaillère est préférable à celui d'un électro-aimant, par exemple, au fonctionnement trop brutal.

D'autre part, les moyens de sélection comportent aussi un ensemble de nervures de repérage 72 de l'empilage rigide des éléments formant entretoises 53 constituant chaque colonne-support 50. Chaque entretoise porte ainsi une telle nervure de repérage sur son bord. L'ensemble de ces nervures permet donc un comptage-décomptage vertical des plateaux d'une même colonne. Ceci est opéré par des premiers moyens de détection, ici opto-électriques, 74 composés d'une paire de cellules portées par l'équipage de transfert 12. Ces moyens de détection pilotent une chaîne de commande du moteur 48 permettant le positionnement vertical de l'équipage de transfert 12 par rapport au plateau de stockage du disque sélectionné, afin de provoquer le pivotement de ce plateau par coopération de son secteur denté 63 avec la crémaillère rétractable 65.

Pour son positionnement correct, tant en position de stockage qu'en position de coopération avec les moyens de préhension 15, chaque plateau de stockage comporte une lame-ressort 76 engagée dans l'espace disponible entre deux éléments formant entretoises 53. Cette lame-ressort est munie d'un ergot 77, à son extrémité. Cet ergot coopère avec des bossages coniques 78 portés par l'un des deux éléments formant entretoises entre lesquels la lame-ressort est engagée. Ce montage permet de relativement stabiliser les positions extrêmes du plateau de stockage. En outre, chaque plateau comporte un trou de positonnement 80 apte à coopérer avec un pointeau 81, de préférence à extrémité conique, porté par l'équipage de transfert. Lorsque celui-ci s'abaisse pour saisir un disque, le pointeau pénètre dans le trou 80 et assure, le cas échéant, un ultime repositionnement du plateau de stockage, garantissant la parfait alignement entre le noyau 36 et le trou du disque. Ce mouvement vertical limité de l'équipage de transfert, pour la préhension d'un disque, est contrôlé par le déplacement relatif entre un doigt 84 du plateau de stockage sélectionné et des seconds moyens de détection 85a, 85b, opto-électriques, portés par l'équipage de transfert. Ainsi, chaque plateau 11 comporte-t-il un doigt 84 qui fait saillie horizontalement vers l'extérieur de façon à pouvoir se placer dans l'espace de détection d'une cellule en forme de U 85a ou 85b. Ces deux cellules sont espacées verticalement d'une distance prédéterminée. Comme on le verra plus loin, cette distance correspond au mouvement vertical des moyens de préhension, nécessaires pour saisir un disque et le dégager de son plateau de stockage.

Comme cela ressort clairement des dessins, les plateaux de stockage sont aussi peu épais que possible pour permettre de loger un grand nombre de disques dans une colonne de hauteur donnée. Dans ces conditions, il est préférable que lesdits plateaux bénéficient d'au moins deux points d'appui opposés en position de stockage. L'un de ces points d'appui est bien entendu l'articulation par laquelle le bras du plateau se trouve solidarisé à la colonne-support 50.

Dans le cas d'une seule colonne de plateaux, on peut prévoir au moins une autre colonne-support 86 parallèle à la colonne de plateaux, c'est-à-dire verticale et comportant des séparateurs 87 entre lesquels lesdits plateaux de stockage sont respectivement engagés pour y être maintenus en position de stockage. Cependant, dans le cas représenté où on a agencé quatre colonnes de plateaux régulièrement disposées circonférentiellement sur l'ensemble tournant 16, il est avantageux de combiner les colonnes-supports 50 et 86 de façon qu'une colonne-support 50 à laquelle s'articulent les plateaux 11 d'une même colonne de plateaux soit conformée pour constituer aussi la colonne-support 86 de la colonne de plateaux voisine.

Dans l'exemple, ceci est obtenu en complétant chaque élément formant entretoise 53. Un tel élément, en plus de son tronçon d'arbre de pivotement 54, permettant l'articulation d'un plateau, comporte aussi une excroissance constituant l'un des séparateurs 87 de la colonne-support 86.

Il est primordial, pour un bon fonctionnement, qu'un plateau 11 puisse en toutes circonstances réintégrer le logement spécifique qui lui est défini entre deux séparateurs 87 voisins, à la fin d'une manoeuvre. Les plateaux 11 comportent à cet effet plusieurs particularités de structure augmentant la fiabilité de fonctionnement, même si le plateau se trouve légèrement déformé par suite de conditions d'utilisation sévères du dispositif.

Ainsi, si on considère la zone d'appui 90 par laquelle le bord du plateau repose normalement dans son logement (sur le séparateur inférieur) de la colonne-support 86, on remarque à côté de celle-ci et vers l'intérieur de la zone de stockage que le bord du plateau comporte une nervure amincie comprenant un tronçon horizontal 92 prolongé par un tronçon incliné de haut en bas, en forme d'hélice, 93, ce dernier se terminant au voisinage immédiat de la zone d'appui 90. De plus, de l'autre côté de cette zone d'appui, circonférentiellement, le bord du plateau est muni d'une nervure en surépaisseur 94. Des expériences ont montré que de telles particularités de structure permettaient d'augmenter la fiabilité du dispositif et plus particulièrement le mouvement de retour du plateau en bonne position dans sa colonne.

De plus, le mouvement de rotation de l'ensemble tournant 16 est mis à profit pour réaligner les plateaux, éventuellement, dans leurs colonnes respectives. Pour ce faire, chaque plateau de stockage comporte une came de positionnement 98 faisant saillie vers l'extérieur de l'ensemble tournant lorsque le plateau est en position de stockage et ces cames coopèrent avec des tiges fixes 99 ou butées analogues disposées verticalement en des emplacements choisis à l'extérieur de l'ensemble tournant. Ces tiges s'étendent parallèlement aux colonnes de plateaux pour coopérer avec les cames de positionnement lors de la rotation de l'ensemble tournant.

Selon une caractéristique avantageuse, l'extraction d'un plateau de sa colonne ou au contraire sa réintégration sont commandées par des mouvements de rotation limités (d'un angle prédéterminé) dudit ensemble tournant, après que la crémaillère 65 ait été mise en prise avec le secteur denté du plateau sélectionné. Autrement dit, l'extraction d'un plateau s'opère par la commande du moteur 30 de l'ensemble tournant, de façon à le déplacer d'un angle prédéterminé et la réintégration du plateau dans sa colonne s'opère de façon analogue par une rotation inverse de l'ensemble tournant. Le signal de commande est élaboré par les premiers moyens de détection 74 précités. En effet, les nervures de repérage 72 ont toutes une même largeur prédéterminée correspondant à cet angle prédéterminé de rotation de l'ensemble tournant.

Enfin, il est à noter que l'équipage de transfert 12 est avantageusement associé à un support libre 101 coulissant le long des deux tiges parallèles 40 et 41, au-dessus de l'équipage de transfert 12. Ce support n'est pas commandé, il suit simplement les déplacements de l'équipage de transfert. Il comporte un bras 102 à l'extrémité duquel se trouve fixée une semelle d'appui 103, rigide, susceptible de venir soutenir un plateau de stockage extrait de sa colonne et l'empêcher ainsi de fléchir d'une façon excessive au moment de la préhension du disque. Cette semelle 103 comporte donc un bord adapté pour entrer en contact avec la face inférieure de la bordure du plateau à l'opposé de son axe de pivotement. De plus, le bras 102 est muni d'un pion 104 apte à prendre appui contre le plateau de stockage, plus particulièrement contre le bras plat 52 de ce dernier, ce qui immobilise momentanément ledit support libre 101 lorsque l'équipage de transfert s'abaisse pour saisir le disque qui se trouve sur le plateau de stockage. Pendant cette opération, le fléchissement dudit plateau de stockage est limité grâce à la présence dudit support libre.

Le fonctionnement du dispositif qui vient d'être décrit découle avec évidence de la description qui précède. Dans une phase initiale, le chargement des différents plateaux s'opère par l'intermédiaire du tiroir manuel mentionné ci-dessus qui présente les disques un à un aux moyens de préhension de l'équipage de transfert. C'est ce dernier qui dépose successivement les disques en des emplacements programmés sur les différents plateaux de stockage. Lorsque la totalité de la discothèque a ainsi été rangée dans le dispositif, et les emplacements des disques mémorisés de façon adéquate par un système de gestion informatique quine fait pas partie de l'invention, la sélection d'un disque et son acheminement vers le lecteur 13a ou 13b s'opère de la façon suivante. L'ensemble tournant 16 est mis en rotation jusqu'à venir positionner la colonne de plateaux de stockage C1-C4 dans laquelle se trouve le disque choisi à un emplacement prédéterminé au voisinage de l'équipage de transfert 12. Le mouvement s'arrête lorsque lesdits premiers moyens de détection 74 se trouvent en regard d'un bord vertical de l'empilage des nervures de repérage 72. Puis, en partant de sa position mémorisée, l'équipage de transfert 12 se déplace verticalement vers le haut ou vers le bas, toujours sous la commande des premiers moyens de détection 74, jusqu'à parvenir à une hauteur correspondant au plateau de stockage Il portant le disque choisi. A partir de ce moment, la crémaillère 65 est actionnée de façon à venir en prise avec le secteur denté de ce plateau de stockage. Toujours sous la commande desdits premiers moyens de détection 74, l'ensemble tournant 16 se déplace d'un angle prédéterminé défini par le déplacement de la nervure 72 en regard des moyens de détection 74. Ceci se traduit par l'extraction dudit plateau de stockage correspondant jusqu'à ce que le doigt 84 de ce plateau pénètre dans la cellule en U 85a. Ensuite, l'équipage de transfert 12 s'abaisse en même temps que la bobine 39 est alimentée, jusqu'à ce que le doigt 84 atteigne la cellule 85b. A ce moment, la bobine est désexcitée, ce qui provoque la saisie du disque et l'équipage de transfert 12 remonte (moteur 48) jusqu'à ce que le doigt 84 retrouve la cellule 85a. Alors, la rotation inverse prédéterminée de l'ensemble tournant est commandée, ce qui provoque le retour du plateau de stockage dans sa colonne. La crémaillère 65 est alors désengagée. L'équipage de transfert 12 s'abaisse alors jusqu'à la hauteur du tiroir 14 où il y dépose le disque par simple actionnement momentané de la bobine 39. Bien entendu, toutes les opérations qui viennent d'être mentionnées sont gérées par un système de commande à microprocesseur dont la conception est à la portée de l'homme du métier et quine fait pas partie de l'invention.

## Revendications

1. Dispositif de stockage et de lecture de supports d'informations plats, tels que par exemple des disques à lecture par faisceau laser, comprenant au moins une colonne de plateaux de stockage (11) de tels supports d'informations, empilés les uns sur les autres et montés mobiles indépendamment dans leurs propres plans respectifs, de façon qu'un plateau sélectionné puisse s'extraire latéralement de ladite colonne, un équipage de transfert (12) monté mobile parallèlement à ladite colonne et comportant des moyens de préhension d'un tel support d'informations, des moyens de sélection d'un support d'informations, adaptés à déplacer dans son propre plan le plateau de stockage (11) correspondant pour l'amener en regard des moyens de préhension et au moins un lecteur (13), caractérisé en ce que ledit lecteur comporte une partie de chargement, par exemple un tiroir, agencée pour pouvoir se placer en regard d'une position prédéterminée dudit équipage de transfert, pour recevoir un tel support d'informations et en ce que ledit équipage de transfert (12) et ledit lecteur (13) sont des sous-ensembles indépendants et autonomes.

2. Dispositif selon la revendication 1, caractérisé en ce qu'il comporte, parallèlement à chaque colonne de plateaux de stockage, une colonne-support (50) desdits plateaux, formant moyens d'entretoisement, agencées pour maintenir un espace sensiblement constant entr'eux et en ce que chaque plateau de stockage (11) est pourvu d'un bras plat (52) venant s'articuler à ladite colonne-support.

3. Dispositif selon la revendication 2, caractérisé en ce que ladite colonne-support (50) est formée par un empilage rigide d'éléments formant entretoises (53), semblables, comportant chacun un tronçon d'arbre de pivotement et en ce que chaque bras comporte un trou cylindrique (60) de diamètre correspondant, par lequel il est monté tournant autour dudit tronçon d'arbre.

4. Dispositif selon la revendication 3, caractérisé en ce que les moyens de sélection précités comportent un secteur denté (63) défini à l'extrémité de chaque bras plat précité, coaxialement audit trou cylindrique (60) par lequel ledit plateau est monté tournant sur ladite colonne-support (50).

5. Dispositif selon la revendication 4, caractérisé en ce que ledit équipage de transfert (12) porte un moyen d'engrenage (65) rétractable susceptible de coopérer avec le secteur denté du plateau de stockage (11) d'un support d'informations sélectionné.

6. Dispositif selon l'une des revendications 3 à 5, caractérisé en ce que les moyens de sélection précités comportent un ensemble de nervures de repérage (72) dudit empilage rigide d'éléments de la colonne-support (50) et des premiers moyens de détection (74), par exemple opto-électriques, portés par ledit équipage de transfert, coopérant avec lesdites nervures, pour le positionnement dudit équipage de transfert par rapport au plateau du support d'informations sélectionné.

7. Dispositif selon l'une des revendications 2 à 6, caractérisé en ce que chaque bras plat de plateau de stockage comporte une lame-ressort (76) engagée entre deux éléments formant entretoises (53) précités et munie d'un ergot (77) à son extrémité, ledit ergot coopérant avec des bossages (78) portés par l'un des deux éléments formant entretoises, pour la stabilisation des positions extrêmes dudit plateau de stockage.

8. Dispositif selon l'une des revendications 1 à 7, caractérisé en ce que chaque plateau de stockage (11) comporte un doigt (84) faisant saillie vers l'extérieur, ce doigt étant apte à coopérer avec des seconds moyens de détection, par exemple opto-électriques, portés par ledit équipage de transfert (12) pour contrôler les déplacements de ce dernier pendant les manoeuvres de préhension d'un support d'informations choisi.

9. Dispositif selon l'une des revendications 1 à 8, caractérisé en ce que chaque plateau de stockage comporte un trou de positionnement (80) apte à coopérer avec un pointeau (81), de préférence conique, porté par ledit équipage de transfert.

10. Dispositif selon l'une des revendications 2 à 9, caractérisé en ce qu'il comporte au moins une autre colonne-support (86), parallèle à ladite colonne de plateaux de stockage et comportant des séparateurs (87) entre lesquels des plateaux de stockage sont respectivement engagés pour être maintenus en position de stockage.

11. Dispositif selon l'une des revendications précédentes, caractérisé en ce que plusieurs colonnes de plateaux de stockage sont agencées sur un ensemble tournant (16) assujetti en rotation autour d'un arbre central parallèle auxdites colonnes et en ce que des moyens d'entraînement commandés (30) sont couplés audit ensemble tournant.

12. Dispositif selon l'ensemble des revendications 10 et 11, caractérisé en ce que lesdites colonnes-supports (50, 86) associées aux colonnes de plateaux de stockage, sont combinées, une colonne-support (50) à laquelle s'articulent les plateaux d'une colonne de plateaux étant aussi conformés pour constituer ladite autre colonne-support (86) de la colonne de plateau voisine.

13. Dispositif selon la revendication 12, caractérisé en ce que chaque colonne-support est formée par un empilage rigide d'éléments formant entretoises (53), semblables, comportant chacun un tronçon d'arbre de pivotement (54) et une excroissance constituant un séparateur (87) de ladite autre colonne-support.

14. Dispositif selon l'une des revendications 10, 12 ou 13, caractérisé en ce que le bord de chaque plateau de stockage (11) comporte une nervure amincie comprenant au moins un tronçon en forme d'hélice (93), ce tronçon se terminant au voisinage de la zone d'appui (90) dudit plateau sur le séparateur précité correspondant.

15. Dispositif selon la revendication 14, caractérisé en ce que le bord de chaque plateau de stockage (11) comporte une nervure en surépaisseur (94) définie au voisinage de ladite zone d'appui.

16. Dispositif selon l'une des revendications 11 à 15, caractérisé en ce que chaque plateau de stockage comporte une came de positionnement (98) faisant saillie vers l'extérieur dudit ensemble tournant lorsque le plateau est en position de stockage et en ce que des tiges fixes (99) ou butées analogues sont disposées en des emplacements choisis à l'extérieur dudit ensemble tournant, parallèlement aux colonnes de plateaux de stockage, pour coopérer avec lesdites cames de positionnement lors de la rotation dudit ensemble tournant et aligner lesdits plateaux dans leurs colonnes respectives.

17. Dispositif selon l'ensemble des revendications 5 et 11, caractérisé en ce que ledit moyen d'engrenage (65) forme une crémaillère montée pivotante en direction des plateaux de stockage et actionnée par un moteur électrique par l'intermédiaire d'une came.

18. Dispositif selon l'ensemble des revendications 5 et 11 ou la revendication 17, caractérisé en ce que les moyens d'entraînement précités (30) dudit ensemble tournant sont aptes à le déplacer en rotation d'un angle prédéterminé lorsque ledit moyen d'engrenage est en prise avec le secteur denté d'un plateau de stockage, pour faire pivoter ce dernier.

19. Dispositif selon l'ensemble des revendications 6 et 18, caractérisé en ce que les nervures de repérage (72) précitées ont une même largeur prédéterminée correspondant à l'angle prédéterminé de rotation précité, lesdits moyens d'entraînement de l'ensemble tournant étant de préférence pilotés par lesdits premiers moyens de détection pour opérer un tel déplacement d'un angle prédéterminé.

20. Dispositif selon l'une des revendications précédentes, caractérisé en ce que ledit équipage de transfert (12) comporte un bras (35) à l'extrémité duquel se trouve un noyau déformable (36), par exemple en élastomère, susceptible de s'engager dans un trou dudit support d'informations, la forme dudit noyau étant modifiée sous l'action d'un moyen de commande tel qu'un électro-aimant, pour pouvoir saisir ledit support d'informations.

21. Dispositif selon l'une des revendications précédentes, caractérisé en ce que ledit équipage de transfert (12) coulisse entre deux tiges parallèles (41, 42) et comporte une noix taraudée (44) immobilisée en rotation, en prise avec une tige filetée (46) elle-même entraînée en rotation, pour le déplacement dudit équipage de transfert.

22. Dispositif selon la revendication 21, caractérisé en ce qu'il comporte un support libre (101) coulissant le long des deux tiges parallèles précitées et entraîné par le déplacement dudit équipage de transfert, en ce que ce support libre comporte un pion (104) apte à prendre appui contre un plateau de stockage extrait de sa colonne et en ce qu'il comporte une semelle (103) d'appui située à l'extrémité dudit plateau et à l'opposé de son axe de pivotement, ladite semelle d'appui étant conformée pour soutenir ledit plateau en bordure de celui-ci à l'extérieur dudit support d'informations.

## Patentansprüche

1. Vorrichtung zur Lagerung und zum Lesen von flachen Informationsträgern, wie z.B. Scheiben zum Lesen mittels Laserstrahl, umfassend zumindest eine Säule von Lagerplatten bzw. Flächen (11) für solche Informationsträger, eine auf der anderen aufgestapelt und in ihren jeweiligen eigenen Ebenen unabhängig beweglich derart befestigt, daß eine ausgewählte Platte sich lateral aus der Säule herausziehen läßt, eine Transfereinrichtung (12) parallel zu der Säule beweglich befestigt und mit Mitteln zum Aufnehmen bzw- Greifen eines solchen Informationsträgers versehen, wobei die Mittel zum Auswählen eines Informationsträgers, angepaßt sind zum Bewegen bzw. Versetzen der entsprechenden Lagerplatte (11) in ihrer eigenen Ebene, um sie gegenüber zu den Aufnahmemitteln zu bringen, und zumindest einen Leser bzw. Abtaster (13),
dadurch **gekennzeichnet,**
daß der Leser einen Beladungsabschnitt aufweist, z.B. eine Schublade, welcher angepaßt ist, um sich gegenüber einer vorbestimmten Position der Transfereinrichtung anordnen zu können, um einen solchen Informationsträger aufzunehmen, und daß die Transfereinrichtung (12) und der Leser (13) unabhängige und autonome Unteranordnungen sind.

2. Vorrichtung gemäß Anspruch 1,
dadurch **gekennzeichnet,**
daß sie eine Stützsäule (50) der Platten aufweist, welche parallel zu jeder Lagerplattensäule ist, und zwar Beabstandungs- bzw. Verstrebungsmittel bildet welche angepaßt sind zum Aufrechterhalten eines praktisch konstanten Abstandes zwischen ihnen, und daß jede Lagerplatte (11) mit einem flachen Arm (52) versehen ist, welcher an die Stützsäule angelenkt ist.

3. Vorrichtung gemäß Anspruch 2,
dadurch **gekennzeichnet,**
daß die Stützsäule (50) durch eine Stapelung steifer Elemente gebildet ist, welche ähnliche Abstandshülsen bzw. Distanzrohre bzw. Zwischenrohre (53) bilden, wobei jede einen Abschnitt einer Dreh- bzw. Schwenkwelle bildet, und daß jeder Arm ein zylindrisches Loch (60) aufweist, mit einem entsprechenden Durchmesser, durch welches er drehend bzw. drehbar um den Wellenabschnitt befestigt ist.

4. Vorrichtung gemäß Anspruch 3,
dadurch **gekennzeichnet,**
daß die Auswahlmittel einen gezahnten Abschnitt (63) umfassen, welcher am Ende von jedem flachen Arm definiert ist, koaxial zu dem zylindrischen Loch (60), durch welches die Platte drehbar auf der Stützsäule (50) befestigt ist.

5. Vorrichtung gemäß Anspruch 4,
dadurch **gekennzeichnet,**
daß die Transfereinrichtung (12) ein zurückziehbares Getriebemittel (65) trägt, welches vorgesehen ist mit dem gezahnten Abschnitt der Lagerplatte (11) eines ausgewählten Informationsträgers zusammenzuwirken.

6. Vorrichtung gemäß einem der Ansprüche 3 bis 5,
dadurch **gekennzeichnet,**
daß die Auswahlmittel umfassen eine Orientierungsrippengruppe (72) der steifen Aufstapelung der Elemente der Stützsäule (50) und erste Erfassungsmittel (74), z.B. opto-elektronische, welche durch die Transfereinrichtungen getragen werden, zusammenwirkend mit den Rippen, zur Positionierung der Transfereinrichtung bezüglich der Platte des ausgewählten Informationsträgers.

7. Vorrichtung gemäß einem der Ansprüche 2 bis 6,
dadurch **gekennzeichnet,**
daß jeder flache Lagerplattenarm eine Federklinge (76) umfaßt, in Eingriff zwischen zwei Elementen, welche die Abstandshülsen (53) bilden und versehen ist mit Vorsprüngen bzw. Nocken (77) an einem Ende, wobei die Nocken mit den Höckern bzw. Vorsprüngen (78) zusammenwirken, welche durch eines der zwei Abstandshülsen bildenden Elemente getragen werden, zur Stabilisierung der extremen Positionen der Lagerplatte.

8. Vorrichtung gemäß einem der Ansprüche 1 bis 7,
dadurch **gekennzeichnet,**
daß jede Lagerplatte (11) einen Finger bzw. Zapfen (84) umfaßt, welcher nach außen vorspringt, wobei der Zapfen geeignet ist, mit zweiten Erfassungsmitteln zusammenzuwirken, z.B. opto-elektronischen, welche durch die Transfereinrichtung (12) getragen werden, zum Steuern bzw. Regeln bzw. Kontrollieren der Versetzung der letzteren während dem Aufnahmevorgang eines gewählten Informationsträgers.

9. Vorrichtung gemäß einem der Ansprüche 1 bis 8,
dadurch **gekennzeichnet,**
daß jede Lagerplatte ein Positionierloch (80) aufweist, welches geeignet ist, mit einem Stift bzw. Nadel (81) zusammenzuwirken, welcher bevorzugt konisch ist, und durch die Transfereinrichtung getragen ist.

10. Vorrichtung gemäß einem der Ansprüche 2 bis 9,
dadurch **gekennzeichnet,**
daß sie zumindest eine weitere Stützsäule (86) umfaßt, welche parallel zu der Lagerplattensäule ist und Aufteiler (87) aufweist, zwischen welchen die Lagerplatten jeweils in Eingriff sind, um in der Lagerposition gehalten zu werden.

11. Vorrichtung gemäß einem der vorangegangenen Ansprüche,
dadurch **gekennzeichnet,**
daß mehrere Lagerplattensäulen auf einer drehenden Anordnung (16) vorgesehen sind, welche einer Rotation um eine zentrale Welle unterworfen wird, welche parallel zu den Säulen ist, und daß betätigte Mitnahmemittel (30) mit der drehenden Anordnung gekoppelt sind.

12. Vorrichtung gemäß Anspruch 10 und 11,
dadurch **gekennzeichnet,**
daß die Stützsäulen (50, 86), welche den Lagerplattensäulen zugeordnet sind, kombiniert sind, wobei eine Stützsäule (50), an welcher die Platten einer Plattensäule gelenkig gelagert sind, ebenfalls angepaßt ist zum Bilden der anderen Stützsäule (86) der benachbarten Plattensäule.

13. Vorrichtung gemäß Anspruch 12,
dadurch **gekennzeichnet,**
daß jede Stützsäule durch eine steife Aufstapelung von Elementen gebildet ist, welche ähnliche Abstandshülsen (53) bilden, wobei jede einen Schwenkwellenabschnitt (54) umfaßt und einen Vorsprung, welcher einen Teiler (87) der anderen Stützsäule bildet.

14. Vorrichtung gemäß einem der Ansprüche 10, 12 oder 13,
dadurch **gekennzeichnet,**
daß der Rand von jeder Lagerplatte (11) eine dünne bzw. verjüngte Rippe umfaßt, welche zumindest einen schraubenförmigen Abschnitt (93) aufweist, wobei dieser Abschnitt in der Umgebung der Abstützzone (90) der Platte an dem entsprechenden Teiler endet.

15. Vorrichtung gemäß Anspruch 14,
dadurch **gekennzeichnet,**
daß der Rand von jeder Lagerplatte (11) Rippen in Überdicke (94) umfaßt, welche benachbart zu der Abstützzone definiert sind.

16. Vorrichtung gemäß einem der Ansprüche 11 bis 15,
dadurch **gekennzeichnet,**
daß jede Lagerplatte einen Positioniernocken (98) umfaßt, welcher nach außen von der drehenden Anordnung vorspringt, wenn die Platte in der Lagerposition ist, und daß befestigte Stäbe bzw. Bolzen bzw. Schafte (99) oder entsprechende Anstöße an ausgewählten Orten, am Äußeren der drehenden Anordnung, parallel zu den Lagerplattensäulen angeordnet sind, zum Zusammenwirken mit den Positioniernocken während der Rotation der drehenden Anordnung und zum Ausrichten der Platten in ihren jeweiligen Säulen.

17. Vorrichtung gemäß den Ansprüchen 5 und 11,
dadurch **gekennzeichnet,**
daß die Getriebemittel (65) eine Zahnstange bilden, welche schwenkbar in Richtung der Lagerplatten befestigt ist, und durch einen Elektromotor mittels einer Nocke betätigt wird.

18. Vorrichtung gemäß den Ansprüchen 5 und 11 oder dem Anspruch 17,
dadurch **gekennzeichnet,**
daß Mitnahmemittel (30) der drehenden Anordnung geeignet sind, um sie drehend bzw. in Drehung um einen vorbestimmten Winkel zu versetzen, wenn das Getriebemittel in Eingriff ist mit dem gezahnten Abschnitt einer Lagerplatte, um letztere zu schwenken.

19. Vorrichtung gemäß den Ansprüchen 6 und 18,
dadurch **gekennzeichnet,**
daß die Orientierungsrippen (72) eine gleiche vorbestimmte Breite besitzen, welche dem vorbestimmten Rotationswinkel entspricht, wobei die Mitnahmemittel der drehenden Anordnung bevorzugt durch die ersten Erfassungsmittel gesteuert bzw. geregelt werden, um eine solche Versetzung um einen vorbestimmten Winkel zu betreiben.

20. Vorrichtung gemäß einem der vorangegangenen Ansprüche,
dadurch **gekennzeichnet,**
daß die Transfereinrichtung (12) einen Arm (35) umfaßt, an dessen Ende sich ein verformbarer Kern (36) befindet, z.B. aus Elastomer, geeignet in ein Loch des Informationsträgers einzugreifen, wobei die Form des Kernes unter Einwirkung eines Befehlsmittels, z.B. eines Elektromagneten verändert wird, um den Informationsträger greifen zu können.

21. Vorrichtung gemäß einem der vorangegangenen Ansprüche,
dadurch **gekennzeichnet,**
daß die Transfereinrichtung (12) zwischen den zwei parallelen Schaften (41, 42) gleitet und eine gewindete Nuß (44) umfaßt, welche unbeweglich in der Drehung ist, wobei sie in Eingriff mit einer Gewindestange (46) ist, welche selbst in der Rotation angetrieben ist, zum Versetzen der Transfereinrichtung.

22. Vorrichtung gemäß Anspruch 21,
dadurch **gekennzeichnet,**
daß sie eine freie Stütze (101) umfaßt, welche entlang der zwei parallelen Schaften gleitet und mitgenommen wird durch die Versetzung der Transfereinrichtung, wobei die frei Stütze einen Stück (104) umfaßt, welches geeignet ist in Abstützung zu kommen gegen eine Lagerplatte, welche aus ihrer Säule herausgezogen ist, und daß sie eine Abstützsohle bzw. -sockel (103) umfaßt, angeordnet am Ende der Platte und gegenüberliegend seiner Schwenkachse, wobei die Abstützsohle geeignet ist, um die Platte an ihrem Rand außerhalb des Informationsträgers zu stützen.

## Claims

1. Device for storing and reading flat data media, such as for example disks for reading by laser beam, comprising at least one column of storage trays (11) for such data media, stacked on top of each other and mounted so as to be able to move independently in their own respective planes, so that a selected tray can be extracted laterally from the said column, a transfer system (12) mounted so as to be able to move parallel to the said column and including means for gripping such a data medium, means for selecting a data medium, able to move the corresponding storage tray (11) in its own plane in order to bring it opposite the gripping means, and at least one reader (13), characterised in that the said reader includes a loading part, for example a drawer, arranged so as to be able to be positioned opposite a predetermined position of the said transfer system, in order to receive such a data medium, and in that the said transfer system (12) and the said reader (13) are independent self-contained subassemblies.

2. Device according to Claim 1, characterised in that it includes, parallel to each storage tray column, a support column (50) for the said trays, forming bracing means, arranged so as to maintain a substantially constant space between them, and in that each storage tray (11) is provided with a flat arm (52) which articulates on the said support column.

3. Device according to Claim 2, characterised in that the said support column (50) is formed by a rigid stack of similar members forming braces (53), each having a length of pivot shaft, and in that each arm has a cylindrical hole (60) of corresponding diameter, by means of which it is mounted so as to rotate about the said length of shaft.

4. Device according to Claim 3, characterised in that the aforesaid selection means have a toothed sector (63) defined at the end of each aforesaid flat arm, coaxially with the said cylindrical hole (60) by means of which the said tray is rotatably mounted on the said support column (50).

5. Device according to Claim 4, characterised in that the said transfer system (12) has a retractable meshing means (65) able to cooperate with the toothed sector on the storage tray (11) of a selected data medium.

6. Device according to one of Claims 3 to 5, characterised in that the aforesaid selection means have a set of ribs (72) for locating the said rigid stack of members of the support column (50) and first detection means (74), for example optoelectrical, carried by the said transfer system, cooperating with the said ribs, for positioning the said transfer system with respect to the selected data medium tray.

7. Device according to one of Claims 2 to 6, characterised in that each storage tray flat arm has a spring blade (76) engaged between two of the aforesaid members forming braces (53) and provided with a snug (77) at its end, the said snug cooperating with protuberances (78) carried by one of the two members forming braces, for stabilising the extreme positions of the said storage tray.

8. Device according to one of claims 1 to 7, characterised in that each storage tray (11) has a finger (84) projecting outwards, this finger being suitable for cooperating with second detection means, for example optoelectrical, carried by the said transfer system (12) for controlling the movements of the latter during the operations of gripping a chosen data medium.

9. Device according to one of Claims 1 to 8, characterised in that each storage tray has a positioning hole (80) suitable for cooperating with a stud (81), preferably conical, carried by the said transfer system.

10. Device according to one of claims 2 to 9, characterised in that it includes at least one other support column (86), parallel to the said storage tray column and including separators (87) between which storage trays are respectively engaged so as to be held in the storage position.

11. Device according to one of the preceding claims, characterised in that several storage tray columns are arranged on a rotary assembly (16) fixed so as to rotate about a central shaft parallel to the said columns, and in that controlled drive means (30) are coupled to the said rotary assembly.

12. Device according to Claims 10 and 11 taken together, characterised in that the said support columns (50, 86) associated with the storage tray columns are combined, a support column (50) on which the trays of a tray column are articulated also being designed so as to constitute the said other support column (86) of the neighbouring tray column.

13. Device according to Claim 12, characterised in that each support column is formed by a rigid stack of similar members forming braces (53), each having a length of pivot shaft (54) and a protrusion constituting a separator (87) for the said other support column.

14. Device according to one of Claims 10, 12 or 13, characterised in that the edge of each storage tray (11) has a thinned-down rib comprising at least one length in the form of a helix (93), this length terminating in the vicinity of the area (90) where the said tray bears on the aforesaid corresponding separator.

15. Device according to Claim 14, characterised in that the edge of each storage tray (11) has a thicker rib (94) defined in the vicinity of the said bearing area.

16. Device according to one of Claims 11 to 15, characterised in that each storage tray has a positioning cam (98) projecting towards the outside of the said rotary assembly when the tray is in the storage position and in that fixed rods (99) or similar stops are disposed at chosen locations outside the said rotary assembly, parallel to the storage tray columns, in order to cooperate with the said positioning cams when the said rotary assembly rotates and to align the said trays in their respective columns.

17. Device according to Claims 5 and 11 taken together, characterised in that the said meshing means (65) forms a rack mounted so as to pivot in the direction of the storage trays and actuated by an electric motor through a cam.

18. Device according to claims 5 and 11 taken together or Claim 17, characterised in that the aforesaid means (30) for driving the said rotary assembly are suitable for rotating it through a predetermined angle when the said meshing means is in engagement with the toothed sector on a storage tray, in order to cause the latter to pivot.

19. Device according to Claims 6 and 18 taken together, characterised in that the aforesaid locating ribs (72) have the same predetermined width corresponding to the aforesaid predetermined rotation angle, the said means of driving the rotary assembly preferably being controlled by the said first detection means in order to produce such a movement through a predetermined angle.

20. Device according to one of the preceding claims, characterised in that the said transfer system (12) includes an arm (35) at the end of which is a deformable hub (36), for example made from elastomer, able to engage in a hole in the said data medium, the shape of the said hub being modified under the action of a control means such as an electromagnet, in order to be able to grip the said data medium.

21. Device according to one of the preceding claims, characterised in that the said transfer system (12) slides between two parallel rods (41, 42) and has a threaded nut (44) immobilised with respect to rotation, engaging with a threaded rod (46) itself driven in rotation, for moving the said transfer system.

22. Device according to Claim 21, characterised in that it includes a free support (101) sliding along the aforesaid two parallel rods and driven by the movement of the said transfer system, in that the free support includes a pin (104) suitable for bearing against a storage tray extracted from its column and in that it includes a bearing sole plate (103) situated at the end of the said tray and opposite its pivot axis, the said bearing sole plate being shaped so as to support the said tray at the edge of the latter outside the said data medium.
